# EUROPEAN PATENT APPLICATION

(11) **EP 0 689 918 A1**
(43) Date of publication of application: **03.01.1996**
(21) Application number: 95109988.6
(22) Date of filing: 27.06.1995
(51) Int. Cl.: B29B 17/02, B29B 13/10, B29C 47/68

(54) **A filtering device for the purification of recycled plastic materials**

(30) Priority: 28.06.1994 IT VI940101
(71) Applicant: CB SYSTEM SRL, I-36016 Piovene Rocchette (VI) (IT)
(72) Inventor: Dall'Alba, Bruno, I-36015 Schio (VI) (IT)
(74) Representative: Bonini, Ercole

(57) **Abstract**

The invention discloses a filtering device for the separation of polluting materials from melted plastic masses in pressing machines for the extrusion of recycled plastic materials, wherein said pressing machines comprise at least one extruder (2), equipped with at least one rotating auger (3) to push the material and with at least one extruding head (4), equipped with an extruding nozzle (5). The filtering device (1) comprises at least one filter (6) arranged in correspondence with said at least one extruder (2) and at least one scraper (11; 21; 31) rotating in contact with the surface of said at least one filter (6) which is attached to one of said at least one rotating auger (3).

## Description

The invention concerns a filtering device for the separation of polluting materials from plastic masses melted in pressing machines for the extrusion of recycled plastic materials.

It is a known fact that the recycling operation of plastic materials is performed in pressing machines within which the material is brought at a melted state and, because of the push of a rotating auger, is extruded through a nozzle which transforms it into filaments.

Since the plastic material to be recycled is often mingled with polluting materials such as wooden or ferrous parts, stones, other plastic materials not compatible with it, and others, it is necessary to separate said polluting materials before the extrusion so that the extruded material can be as pure as possible and, therefore, have a suitable quality so as to allow its use in subsequent processings.

In order to separate such polluting materials from the melted plastic mass, proper filtering systems, realized according to various criteria, are used. These are positioned inside a filtering chamber which is arranged between the extruder and the extruding nozzle of the pressing machine within which the recovery of such a recycled plastic material is performed.

A filtering system belonging to the known technique foresees the use of a pair of filtering plates, each controlled by a pneumatic or hydraulic cylinder which allows its insertion or its removal from the filtering chamber within which it is arranged. During the normal processing, both filtering plates are involved in the flow of the melted plastic material. When it is necessary to replace the filters because they are clogged, the plates are removed one at a time, by keeping the other one in operation so as to prevent the extrusion process from being interrupted.

The filtering system belonging to the described known technique presents, however, the inconvenience that it does not perform a constant filtration during the processing, since the clogging of the filters increases as the extrusion process proceeds.

Consequently, this does not allow to keep always the same extruding pressure after the filters and before the extruding nozzle and causes the extruded material to present different densities according to the degree of clogging of the filters.

Filtering systems are also known and used which employ continuous filters consisting of a wound-up, ribbon-shaped filtering net which is fed transversally to the filtering chamber between the extruding auger and the extruding nozzle inside the filtering chamber, which advances automatically by exploiting the specific rheologic behaviour of the melted masses of plastic material which are processed, or by means of mechanical systems.

Even such filtering systems present the inconvenience that the density of the product coming out from the extruding nozzle varies during the processing since the filtering capacity of the filtering net is not keep constant in the course of time.

Filtering systems are also known, wherein the filtration occurs by means of a pair of filters inserted in the filtering chamber and arranged facing one another. Each of them is equipped with a rotating scraper which removes from its surface the impurities separated from the melted plastic mass during the extrusion. Such scrapers are both coupled with a rotating shaft co-axial with both said filters, which presents one end mechanically connected to an external power unit. Said shaft is hollow inside and presents, in correspondence with the intermediate area comprised between the filters, an opening in which the polluting materials separated by the filters and removed by the scrapers enter by means of a valve, and are discharged on the outside.

Also such filtering systems present, however, some inconveniences, the main one of which is that their rather complex construction, so that they are rather expensive to make.

In fact, besides the difficulties in obtaining the systems for discharging on the outside the separated polluting materials, the scrapers are kept into rotation by an external power system which requires also the presence of a proper kinematism to transmit the motion.

Moreover, the presence of kinematisms connected with one another to transmit the rotation to the scrapers, decreases the operating reliability of the filtering device and increases the necessity for maintenance interventions.

Besides the mentioned inconveniences, said filtering devices present another inconvenience in that they have rather large dimensions, thus making it necessary to manufacture filtering chambers having quite considerable dimensions.

This in turn increases the chances for the material to degrade during the extrusion, since the distance between the extruding auger and the extruding nozzle from which the extruded plastic material comes out, increases.

The present invention proposes to overcome the mentioned inconveniences.

One purpose of the invention is to obtain a filtering device which keeps constant its filtering capacity during the processing.

Another purpose is for the filtering device according to the invention not to present protruding parts or not to have to be removed from and re-introduced into the filtering chamber during the extrusion of the material.

Another purpose is for the filtering device according to the invention to have smaller dimensions as compared with equivalent filtering devices belonging to the known technique, so as to permit the realization of filtering chambers having smaller volume and suitable to contain it.

It is another purpose that in said filtering chamber the distance between the extruding auger and the extruding nozzle is reduced.

It is another purpose for the filtering device according to the invention to be equipped with a scraper for cleaning the filter which is not set into rotation by external means and, therefore, can rotate without using external kinematisms to transmit the motion.

The described purposes are achieved by a filtering device for the separation of polluting materials from melted plastic masses in pressing machines for the extrusion of recycled plastic materials, wherein said pressing machines, in accordance with the main claim, comprise at least one extruder, equipped with at least one rotating auger to push the material and with at least one extruding head equipped with an extruding nozzle, said filtering device comprising at least one filter arranged in correspondence with said at least one extruder and at least one scraper acting in contact with the surface of each of said at least one filter, said at least one filter and said at least one scraper being contained in a filtering chamber arranged between said at least one extruder and said at least one extruding head, and is characterized in that each of said at least one scraper is keyed on to one of said at least one auger through connecting means suited to transmit the rotation of said auger to said scraper.

Advantageously, said at least one filtering chamber presents at least one discharge opening suited to convey outside said at least one filtering chamber, the polluting materials filtered by said at least one filter and removed by the corresponding scraper.

With as much advantage, the filtering device according to the invention, by keeping constant its filtering capacity during the processing, allows to keep constant the density of the extruded product.

Again to an advantage, the filtering device according to the invention is of simpler and less costly construction and guarantees a higher degree of reliability during the operation, as compared with filtering devices equivalent to it.

Moreover, since the distance between the auger and the extruding nozzle is smaller than the distances necessary when using the filtering devices belonging to the known technique, the plastic material is subject to less stress and is, therefore, of better quality.

Further scope of applicability of the present invention will become apparent from the detailed description given hereinafter. However, it should be understood that the detailed description and specific example, while indicating a preferred embodiment of the invention, are given by way of illustration only, since various changes and modifications within the spirit and scope of the invention will become apparent to those skilled in the art from this detailed description and from the drawings, wherein:
- Fig. 1 shows, in a cross-section, the filtering device according to the invention composed by an extruder and by a extruding nozzle belonging to a pressing machine for extrusion;
- Fig. 2 shows the detail of means for the discharge of the polluting materials separated in the filtering chamber;
- Fig. 3 represents the front view of the scraper belonging to the filtering device represented in Fig. 1;
- Fig. 4 shows a side view of the scraper of Fig. 3;
- Fig. 5 represents a front view of a different embodiment of the scraper;
- Fig. 6 is a lateral view of the different embodiment of the scraper represented in Fig. 5;
- Fig. 7 represents the front view of another variation of the scraper;
- Fig. 8 is a lateral view of the scraper represented in Fig. 7.

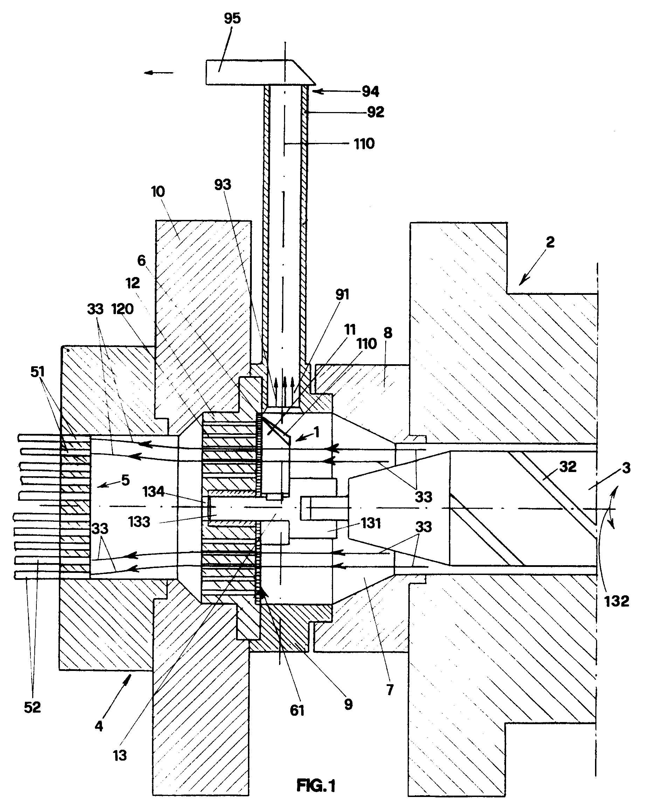

As can be observed in Fig. 1 the filtering device according to the invention, which is indicated as a whole with 1, is applied to a pressing machine within which it is arranged between an extruder 2 complete with a rotating auger 3 pushing the material and an extruding head 4 equipped with an extruding nozzle 5.

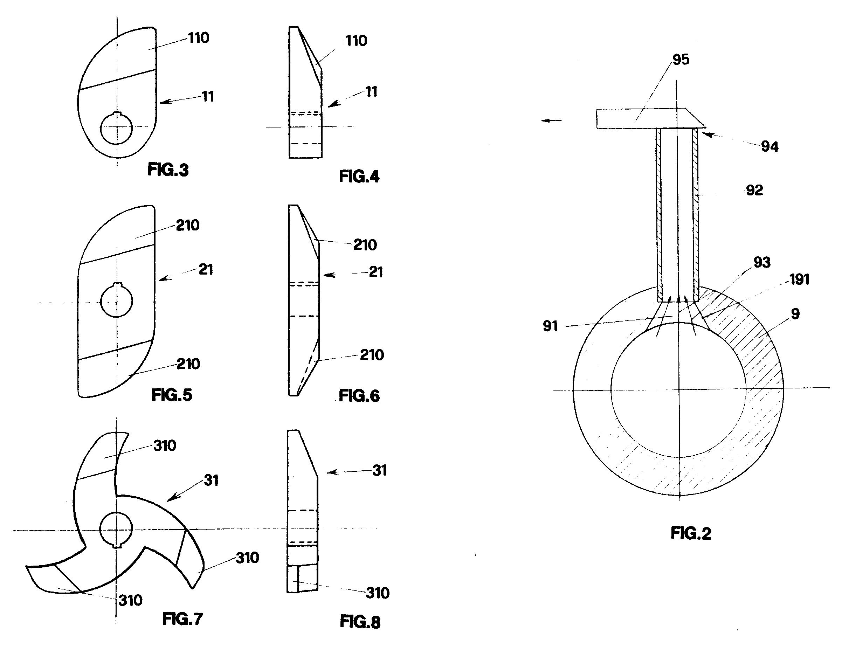

More specifically it will be observed that said filtering device comprises a filter 6 arranged in front of the auger 3, which is contained within a filtering chamber 7, which is delimited by a coupling flange 8, applied to said extruder 2 and by an intermediate flange 9, having an essentially cylindrical section, as can be observed in Fig. 2, which is comprised between said coupling flange 8 and said filter 6. Said intermediate flange 9 is in turn coupled also to the extruding head 4 by the interposition of the front flange 10, so that said intermediate flange 9 is comprised between said coupling flange 8 and said front flange 10.

Finally, a filter-holding disk 12 is comprised between said intermediate flange 9 and said front flange 10.

It will be pointed out that in a different embodiment, the pressing machine may be equipped with more than one extruder, provided in turn with more than one auger and more than one extruding head. Moreover, more than one filter may be present in the filtering chamber.

When the auger 3, which rotates either in a clockwise or anti-clockwise direction as indicated by arrow 132 following the inclination of its blades 32, it causes the plastic material which is brought to the melted state in a part of the pressing machine not represented in the Figure, to progress following the direction 33. The material goes through filter 6 and along the channel 120 of the filter-holding disk 12 supporting filter 6 and it arrives at the extruding nozzle 5 through the holes 51 of which it exits in the shape of the filaments 52.

The impurities present in the melted plastic mass stop at filter 6, which consists of a disk presenting a number of holes having variable diameters in accordance both with the quality of the material to be extruded and with the type of impurities present in the material itself.

The continuous removal of said polluting materials which stop on the surface 61 of filter 6 preceding the filtering chamber 7, occurs by means of a scraper 11 which turns together with auger 3, since, as it can be observed, it is keyed on to the auger by means of a pivot 13. In detail said pivot 13 has its end 131 keyed on to auger 3, its opposite end 133 is rotatingly coupled within a through-going hole 134 obtained in filter 6 and in the filter-holding disk 12, while its central body is attached to scraper 11 by fastening means belonging to the known technique.

It can be observed in detail in Fig. 2 that an essentially radial discharge opening 91 is obtained in flange 9 in correspondence with the rotational vertical plane 110 of scraper 11. The pressure exerted by the material present in the filtering chamber 7 pushes the impurities scraped off by scraper 11 into said opening 91. These are conveyed to the outside through the discharge pipe 92 connected with opening 91 following direction 93.

At the end 94 of said discharge pipe 92 there is a device 95 for the opening and closing of the end 94 itself. Said device is operated by a timer which allows the discharge at regular intervals of the polluting materials which have been filtered together with a part of the melted plastic material.

With regard to the amount of melted plastic material which is expelled and discharged together with the separated polluting materials, said amount is very small and much lower in percentage as compared with the percentage of melted plastic material which is expelled and discharged when using filtering devices belonging to the known technique. In fact, since the scraper is positioned in correspondence with the discharge opening 91, when it rotates, it collects the impurities near the discharge opening 91 itself which is provided with slanted rims 191 which make the expulsion of the materials themselves easier.

As a consequence, the quantity of melted plastic material which is expelled together with the discharge pipe 92 is rather limited to the advantage of the convenience of the process.

On the basis of what has been described, it can be concluded that the filtering device according to the invention fulfils all the proposed purposes.

First of all, the purpose of obtaining a filtering device simple and unexpensive to manufacture which does not need any external rotational units has been reached. In fact, as can be observed, the rotation of the scraper 11 occurs because of the rotation of the auger 3 from which it acquires its motion thanks to the connecting pivot 13.

It has also been seen that, since the rotation of said scraper 11 is continuous, the surface 61 of filter 6 is always clean and, as a consequence, it maintains its filtering capacity constant all the time. It follows that there is a constant pressure in the filtering chamber and, therefore, a constant density in the extruded product 52.

Moreover, it has been seen how the reduced dimensions of the filtering device according to the invention permits to make the filtering chamber with a more limited volume. This entails that the material is subject to less stress and, therefore, the extruded product is of better quality.

As for the scraper 11, it is also represented in the Figs. 3 and 4, wherein it can be observed that it consists of a single blade 110.

The scraper can also be made in the shape represented in the Figs. 5 and 6, wherein it is indicated with 21 and wherein it can be observed that it is provided with two blades 210 placed opposite to each other.

According to another embodiment, the scraper could also be made in the shape represented in the Figs. 7 and 8, wherein it is indicated with 31 and wherein it can be observed that it is provided with three blades 310 arranged at an angle of 120° from each other.

During the manufacturing process the filtering device according to the invention may undergo modifications consisting, for instance, in different systems or methods of attaching the scraper to the auger.

Other modifications may consist, for instance, in increasing the number of the discharge openings or in a different embodiment of the same or in a different shape of the scraper.

It is, however, understood that all said modifications still fall within the spirit and scope of the present invention.

## Claims

1. A filtering device for the separation of polluting materials from melted plastic masses in pressing machines for the extrusion of recycled plastic materials, wherein said pressing machines comprise at least one extruder (2), equipped with at least one rotating auger (3) to push the material and with at least one extruding head (4), equipped with an extruding nozzle (5), said filtering device (1) comprising at least one filter (6) arranged in correspondence with said at least one extruder (2) and at least one scraper (11; 21; 31) acting in contact with the surface (61) of each of said at least one filter (6), said at least one filter (6) and said at least one scraper (11; 21; 31) being contained in a filtering chamber (7) arranged between said at least one extruder (2) and said at least one extruding head (4), **characterized in that** each of said at least one scraper (11; 21; 31) is keyed on to one of said at least one auger (3) through connecting means (13) suited to transmit the rotation (132) of said auger (3) to said scraper (11; 21; 31).

2. A filtering device according to claim 1, **characterized in that** said at least one filtering chamber (7) containing said at least one filter (6) and said at least one scraper (11; 21; 31) presents at least one discharge opening (91) suited to convey outside said filtering chamber (7) the polluting materials filtered by said at least one filter (6) and removed by said at least one scraper (11; 21; 31).

3. A filtering device according to claim 2, **characterized in that** said at least one filtering chamber (7), presenting said at least one discharge opening (91) and containing said at least one filter (6) and said at least one scraper (11; 21; 31), is delimited by a coupling flange (8) applied to said at least one extruder (2) and by an intermediate flange (9) comprised between said coupling flange (8) and said at least one filter (6), said intermediate flange (9) also being connected to said at least one extruding head (4) by the interposition of a front flange (10).

4. A filtering device according to claim 3, **characterized in that** said at least one discharge opening (91) is obtained in said coupling flange (9).

5. A filtering device according to claim 4, **characterized in that** said at least one discharge opening (91) is essentially radial and passes through the thickness of said intermediate flange (9).

6. A filtering device according to any of the previous claims **characterized in that** said at least one discharge opening (91) has slanted rims (191).

7. A filtering device according to claim 1 or 2 or 3, **characterized in that** said at least one discharge opening (91) is obtained in correspondence with the rotation plane of said at least one scraper (11; 21; 31) and is connected with a discharge pipe (92).

8. A filtering device according to claim 3, **characterized in that** said at least one filter consists of a pierced disk. (6) coupled face to face with a filter-holding disk (12) which supports it, said filter-holding disk (12) being comprised between said front flange (10) and said intermediate flange (9) and being equipped with lengthwise channels (120) for the passage of the melted plastic material.

9. A filtering device according to claim 1, **characterized in that** said junction means for the attachment of said scraper (11; 21; 31) to said auger (3) consist of at least one pivot (13) having one end (131) rigidly attached to said auger (3) and its opposite end (133) rotatingly attached within a through-going hole (134) obtained in said filter (6), while the body of said pivot (13) is rigidly attached to said scraper (11; 21; 31).

10. A filtering device according to claim 1 or 2 or 3 or 7, **characterized in that** said scraper (11) presents a single blade (110).

11. A filtering device according to claim 1 or 2 or 3 or 7, **characterized in that** said scraper (21) presents two blades (210) placed opposite to each other.

12. A filtering device according to claim 1 or 2 or 3 or 7, **characterized in that** said scraper (31) presents three blades (310) arranged at an angle of 120° from each other.
